# EUROPEAN PATENT SPECIFICATION

(11) **EP 2 238 559 B1**
(45) Date of publication and mention of the grant of the patent: **14.05.2014**
(21) Application number: 09707006.4
(22) Date of filing: 28.01.2009
(51) Int. Cl.: G06K 7/00, G06K 7/10, G06K 19/07

(54) **METHOD AND APPARATUS FOR PROVIDING ENERGY TO PASSIVE TAGS IN A RADIO -FREQUENCY IDENTIFICATION SYSTEM**
VERFAHREN UND VORRICHTUNG ZUR BEREITSTELLUNG VON ENERGIE FÜR PASSIVE TAGS IN EINEM RFID-SYSTEM
PROCÉDÉ ET APPAREIL POUR FOURNIR DE L'ÉNERGIE À DES ÉTIQUETTES PASSIVES DANS UN SYSTÈME D'IDENTIFICATION PAR RADIOFRÉQUENCE

(30) Priority: 31.01.2008 CN 200810004983
(43) Date of publication of application: 13.10.2010
(60) Divisional application: 10013329.7
(73) Proprietor: Siemens Aktiengesellschaft, 80333 München (DE)
(72) Inventor: HORST, Dieter, 90556 Cadolzburg (DE); LAMPE, Mattias, Beijing 100102 (CN); YU, Dan, Beijing 100102 (CN); YUAN, Yong, Beijing 102208 (CN)
(86) International application number: PCT/EP2009/050944
(87) International publication number: WO 2009/095409

(56) References cited:
- EP-A- 1 796 016
- WO-A-2006/018231
- US-A1- 2006 006 986
- US-A1- 2006 289 649
- US-B1- 6 169 474

## Description

### Technical field

The present invention relates to a radio-frequency identification (RFID) technology and, in particular to a method and an apparatus for providing energy to the tags in a radio-frequency identification system using such passive tags.

### Background art

A radio-frequency identification system is typically composed of a reader/writer (or interrogator) and the tags. In a radio-frequency identification system using passive tags, the energy of the passive tags is obtained from the radio frequency waves sent by the reader/writer. For example, in the radio-frequency identification system based on EPC C1G2 (EPC Radio-Frequency Identity Protocols Class-1 Generation-2 UHF RFID Protocol for Communications at 860MHz - 960MHz Version 1.0.9) protocol, the reader/writer sends commands and continuous waves alternately during a communication process, the tags can obtain energy from the signals sent by said reader/writer.

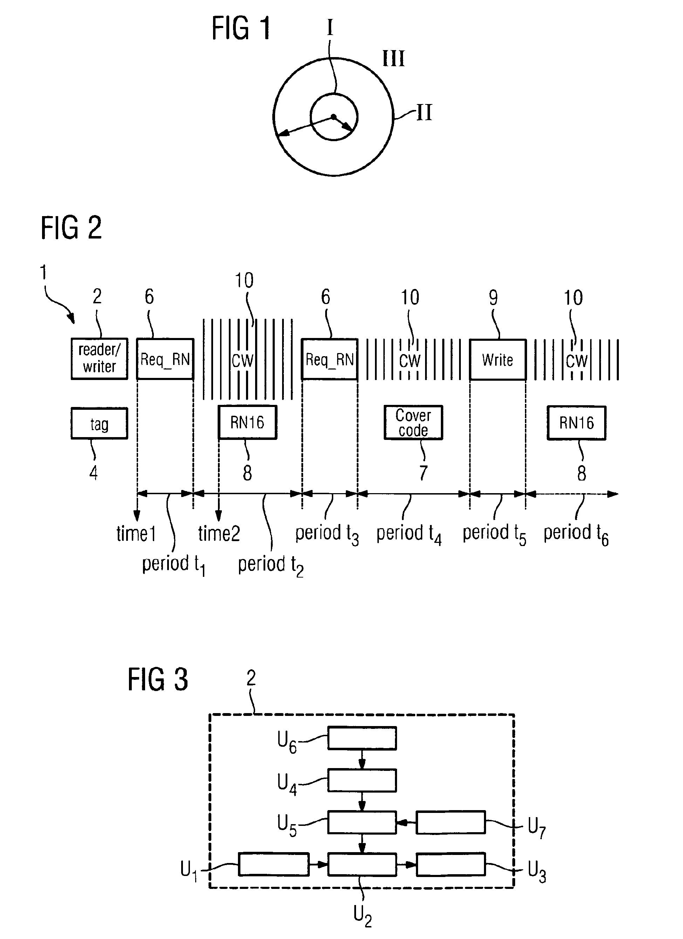

The reading from and writing to the tags by the reader/writer are two main operations in the radio-frequency identification system, a writing operation is typically executed by the reader/writer after a reading operation. When the reader/writer executes a writing operation, more energy will be consumed than a reading operation. Since some tags which are far away from the reader/writer obtain less energy, they may rewritable range not have enough energy to perform the reliable writing operation after having executed a reading operation. Therefore, the in the radio-frequency identification system using the passive tags is much smaller than the readable range, as shown in Fig. 1. This will limit many applications of such radio-frequency identification systems.

In order to improve the reliability of the writing operation and to extend the rewritable range, it is necessary to provide more energy to the passive tags in the radio-frequency identification system to perform the reliable writing operation.

In addition, when the reliability of the reading operation also needs to be improved and the readable range also needs to be extended in the radio-frequency identification system, it is also necessary to provide more energy to the passive tags in the radio-frequency identification system.

WO 2006/018231 A1 - Finkenzeller et al. "Controlled wireless charging of an accumulator in a chipcard" which is regarded as closest prior art document, discloses a method for providing energy to a RFID tag, whereby an enhanced transmission period with enhanced field strength, in which no data transmission occurs, is used to charge the RFID tag.

US 6,169,474 B1 - Roy et al. "Method for communications in a backscatter system, interrogator, and backscatter communications system" also discloses an enhanced transmission period with increased transmission power for transmitting energy to a RFID tag.

### Contents of the invention

An object of the present invention is to provide a method, an apparatus and a system for providing energy to the tags in a radio-frequency identification system using the passive tags, so as for the tags to obtain more energy, to improve the reliability in executing the reading and/or writing operations, and to extend the read-only and/or the rewritable range of the radio-frequency identification system.

This object is solved by a method according to claim 1, and by a reader/writer apparatus according to claim 7.

The method of the present invention for providing energy to a passive tag in a radio-frequency identification system, a communication process of a reader/writer of said radio-frequency identification system comprises at least one period for transmitting command signals and at least one period for transmitting continuous waves, and the tag of said radio-frequency identification system obtains energy from said continuous waves; said reader/writer selects at least one period from the period(s) for transmitting the continuous waves as an enhanced period; then, said reader/writer adjusts a gain for transmitting signals, so as to send the continuous waves with an enhanced power during said enhanced period, and/or, said reader/writer adjusts a time length for transmitting the continuous waves to the tag, so as to send the continuous waves with an extended time length during said enhanced period, and said reader/writer further obtains relevant information for adjusting said gain through a training period.

As a preferred solution, said step for selecting the enhanced period comprises: when said reader/writer detects that received signal strength for the tag is less than a preset reference value for the received signal strength, said reader/writer selects at least one of a current or a subsequent period for transmitting the continuous waves as said enhanced period.

As another preferred solution, said step for selecting the enhanced period comprises: when a bit number to be written by said reader/writer into the tag is greater than a preset reference value for the bit number, said reader/writer selects at least one of a current or a subsequent period for transmitting the continuous waves as said enhanced period.

As still another preferred solution, said enhanced period is pre-selected by said reader/writer.

Specifically, said enhanced transmitting power is greater than a transmitting power for transmitting the command signals.

Preferably, said enhanced transmitting power is a maximum allowable transmitting power.

The invention provides a reader/writer for realizing the first method, comprising: a transmitting signal generating unit, for generating transmitting signals to be sent to the tag, with said transmitting signals comprising at least one period for transmitting the command signals and at least one period for transmitting the continuous waves; a power adjusting unit, for receiving the transmitting signals provided by said transmitting signal generating unit, and for performing a power adjustment to said transmitting signals according to a set gain; an antenna unit, for transmitting out the transmitting signals from said power adjusting unit; a period selecting unit, for selecting at least one period from the period(s) for transmitting continuous waves as an enhanced period; a gain controlling unit, said gain controlling unit being used for adjusting the gain of said power adjusting unit, so as to make the continuous waves reach an enhanced transmitting power during said enhanced period; and/or, a time length setting unit, for controlling the time length of the transmitting signals of said transmitting signal generating unit, so as to extend the time length of the above period for transmitting the continuous waves during said enhanced period and a training unit, for executing a training period and obtaining relevant information, so as to determine the gain set for said power adjusting unit during said enhanced period and to provide the same to said gain controlling unit.

As a preferred solution, said reader/writer further comprises: a condition judging unit, for detecting the received signal strength for the tag, wherein when it judges that said received signal strength is less than a preset reference value for the received signal strength, it triggers said period selecting unit to select at least one period from the period(s) for transmitting the continuous waves as the enhanced period.

As another preferred solution, said reader/writer further comprises: a condition judging unit, for detecting a bit number to be written to the tag, wherein when it judges that said bit number is greater than a preset reference value for the bit number, it triggers said period selecting unit to select at least one period from the period(s) for transmitting the continuous waves as the enhanced period.

In the currently available radio-frequency identification systems using the passive tags, a reader/writer sends the continuous waves in the gaps between transmitting the command signals so as to provide energy to the tags, and it uses the same transmitting power both for transmitting the command signals and transmitting the continuous waves. An aspect of the first method of the present invention is to enhance the transmitting power of the continuous waves during the selected enhanced period, and compared with the prior art, this method of the present invention can make the tags obtain more energy from the continuous waves for the reading and/or writing operations, thereby improving the reliability of the reading and/or writing operations, and extending the read-only range and/or rewritable range of the system. Moreover, the lower transmitting power is still used to send the signals during other periods, which can avoid too much interference to the operation of other reader/writers. This method of the present invention does not increase the time for transmitting the continuous waves, therefore it will not extend the time used for the reading and writing operations. If the enhanced transmitting power is trigged only when a preset condition is met, then great interference to the operation of other reader/writers can be avoided while more power is provided to the tags so as to improve the reliability of the reading and/or writing operations.

Another aspect of the method of the present invention is to extend the time for transmitting the continuous waves, and compared with the prior art, this method of the present invention can make the tags obtain in a longer charging process more energy for the writing operation, thereby improving the reliability of the reading and/or writing operations, and extending the read-only range and/or the rewritable range of the system. This method does not increase the transmitting power for the continuous waves, and therefore this will not result in additional interference to the operation of other reader/writers. If the extended transmitting time is triggered only when a preset condition is met, then the efficiency of reading and/or writing operations can be improved while more power is provided to the tags so as to improve the reliability of the reading and/or writing operations.

### Description of the drawings

Fig. 1 is a schematic diagram of the read/write ranges in a radio-frequency identification system using the passive tags;
Fig. 2 shows a schematic diagram of a process in which a reader/writer performs a reading operation to a tag in a first embodiment of the present invention;
Fig. 3 shows a schematic construction diagram of the reader/writer for realizing the method described in the first embodiment of the present invention;
Fig. 4 is an example for the implementation of a power adjusting unit;
Fig. 5 is an example of another realization of a power adjusting unit;
Fig. 6 shows a schematic diagram of a process in which a reader/writer performs the writing operation to a tag in a second embodiment of the present invention;
Fig. 7 gives a schematic construction diagram of the reader/writer for realizing the method described in the second embodiment of the present invention;
Fig. 8 is a schematic construction diagram of a transmitting signal generating unit of the reader/writer in the second embodiment of the present invention;
Fig. 9 gives a schematic diagram of an independent energy supplying apparatus.

The present invention will be described in detail hereinbelow in combination with the drawings.

Fig. 1 shows read/write ranges, whereas the inner circle represents a rewritable range I, the outer circle presents a read-only range II and the area around the circles represents an unreadable range III.

### Embodiments

According to the present invention expressed by claim 1 and claim 7, energy is provided to the passive tags in a radio-frequency identification system 1 using such passive tags 4 (hereinafter referred to as tags), so that the tags 4 obtain more energy for performing the reading and/or writing operations reliably. From the point of view of a radio-frequency identification system, this means an extended coverage range.

### Embodiment one

A first embodiment of the present invention is to increase the energy supply to the tags by increasing the power strength in transmitting the continuous waves by a reader/writer.

The first embodiment will be described in detail herein below in combination with a process shown in Fig. 2. Fig. 2 shows an example of the process in which the reader/writer 2 performs a writing operation to a tag 4 after having performed a reading operation, wherein the example is based on the EPC C1G2 protocol. After the reader/writer 2 has performed the writing operation to a set of tags 4 (for example at time t₁), the tags 4 having been successfully read are in an acknowledged state. At this time, the reader/writer 2 sends a Req_RN command 6 to a tag 4 in the acknowledge state. The tag 4 generates and stores a new RN16 8, which can also be called a handle and which handle is returned to the reader/writer 2 by backscattering, and it turns to an open state or a secured state (for example at time t₂). Then the reader/writer 2 sends out one Req_RN command 6 with the RN16 8, and the tag returns one cover code 7 correspondingly. Then, an access command 9, such as writing, can be executed by the tag. The tag 4 returns its handle to the reader/writer 2 to indicate a successful operation, or returns an error code to indicate an unsuccessful operation.

It can be seen from the above process that, in the prior art, the reader/writer 2 sends the command signals and the continuous waves 10 (CW) during a communication process, and the tags 4 can obtain energy from the signals sent by said reader/writer 2, wherein the same transmitting power is used in transmitting both the command signals and the continuous waves 10. In fact, the tags 4 obtain energy mainly from the period for transmitting the continuous waves. As a result, according to the present invention, from those periods (for example the periods t₂, t₄, t₆) for transmitting the continuous waves 10, the reader/writer 2 will select at least one period (for example the period t₂) as an enhanced period; the reader/writer 2 performs a power adjustment on the transmitted signals, so as to send out the transmitting signals during said enhanced period (namely continuous signals) with an enhanced transmitting power, and the transmitting signals in the other periods (for example the periods t₁, t₃, t₄, t₅, t₆) can be sent out with a transmitting power determined by a conventional method. In the present invention, the so-called enhanced transmitting power refers to a power greater than the power used during the period for transmitting the command signals.

Therefore, by way of transmitting the continuous waves 10 at the enhanced transmitting power during the enhanced period, the tags 4 can obtain more energy from the continuous waves 10. While during the other periods, a smaller transmitting power, for example the transmitting power determined by the conventional method, is still used, which can avoid great interference to the operation of the other reader/writers 2 nearby. In this way, the tags 4 can obtain more energy for the writing operation during the enhanced period.

Specifically, a maximum allowable power can be used as the enhanced transmitting power during the period t₂. Said maximum allowable transmitting power is typically limited by the radio-related regulations, for the purpose of avoiding the case of generating too much interference to other radio systems.

A preferred way for the adjustment is as follows, the reader/writer 2 can be triggered to select at least one period as the enhanced period when a preset condition is met, and the continuous waves 10 are sent out at the enhanced power during the period. In this way, the transmitting power of the continuous waves 10 is increased only when it is necessary, and the interference to the operation of the other reader/writers 2 can be reduced as much as possible. Said preset condition can be that: the received signal strength indicator (RSSI) for the tags 4 of said reader/writer 2 is less than a preset reference value for the strength of the received signal, or the bit number to be written into the tag 4 is greater than a preset reference value for the bit number. A particular way for doing this is for the reader/writer 2 to detect the strength of a received signal on which a writing operation needs to be performed, and then said strength of the received signal is compared with the preset reference value for the strength of the received signal, if the strength of said received signal is less than the preset reference value for the received signal strength, then it is determined that the preset condition is met. Another particular way for doing this is for the reader/writer 2 to detect the number of bits sent to the tags 4 on which a writing operation needs to be performed currently, and then said bit number is compared with a preset reference value for the bit number, if said bit number is greater than the preset reference value for the bit number, then it is determined that the preset condition is met. Preferably, the first period for transmitting the continuous waves 10 after having determined that the preset condition is met is selected as an enhanced period, and this can promptly increase the energy supply to the tags 4 with insufficient energy, thereby improving the reliability of the subsequent operation even more.

During an implementation, the above-mentioned object can be achieved by performing a gain adjustment to the power for transmitting the signals before transmitting the signals. In order to set the corresponding gain more precisely, the reference information for gain adjustment can be obtained by one or more time segments for training at the starting stage of a communication process. The detailed process can refer to the method of the prior art for obtaining the relevant information, for example the signal power and for gain setting through training periods, which will not be described in detail in the present invention.

In this embodiment, as an example, only one period t₂ is selected to enhance the transmitting power of the continuous waves 10. As an alternative solution, more than one period (for example the periods t₂, t₄) can also be selected to enhance the transmitting power of the continuous waves 10. It is better to select the number of the enhanced periods according to the specific needs for energy by the tag's writing operation, so as to achieve better effects.

Fig. 3 shows a schematic diagram of the reader/writer 2 for realizing the method described in the first embodiment of the present invention.

The reader/writer apparatus comprises a transmitting signal generating unit U₁, a power adjusting unit U₂, an antenna unit U₃, a period selecting unit U₉ and a gain controlling unit U₅.

In this case, the transmitting signal generating unit U₁ generates modulated transmitting signals to be sent to the tags 4, and said transmitting signals comprise at least one period for transmitting the command signals and at least one period for transmitting the continuous waves 10. The power adjusting unit U₂ receives the transmitting signals provided by said transmitting signal generating unit U₁, and performs a power adjusting to said transmitting signals according to the set gain. The antenna unit U₃ sends out the transmitting signals from said power adjusting unit U₂. Basically the above-mentioned units are the same as the corresponding units in an existing reader/writer; its detailed implementation can refer to the prior art.

According to the reader/writer 2 of the present invention, it is also provided with a period selecting unit U₄, which is used for selecting at least one period from the periods for transmitting continuous waves 10 as an enhanced period.

According to the reader/writer 2 of the present invention, it is also provided with a gain controlling unit U₅, which is used for adjusting the gain set for said power adjusting unit U₂, so as to allow the continuous waves 10 to reach the enhanced power during said enhanced period, and to obtain the transmitting power for example determined by the conventional method during the other periods.

The specific mode for setting the gain controlling unit U₅ for the gain can be as follows, for example, during a pre-selected enhanced period (for example the period t₂), a high gain is used to adjust the power of the continuous waves 10, so as to allow the transmitting power of the continuous waves 10 to reach the enhanced transmitting power, for example to reach the maximum allowable transmitting power; while during the other periods, a low gain is used to adjust the power of the transmitting signals, so as to allow it to reach the transmitting power determined by the conventional method. This setting mode is simple to implement.

In addition, the period selecting unit can also select the enhanced period only when the preset condition is met and make the gain controlling unit U₅ adjust the set gain, so as to reduce as much as possible the interference to the operation of the other reader/writers 2 while providing enough energy to the tags 4. To achieve this purpose, said reader/writer 2 further comprises a condition judging unit U₆, which is used for detecting the received signal strength for the tags 4, and when it is determined that said received signal strength is less than a preset reference value for the received signal strength, a notice that the preset condition has been met is sent to the period selecting unit; or, the condition judging unit U₆ detects the bit number to be written into the tags 4, and when it is determined that said bit number is greater than a preset reference value for the bit number, a notice that the preset condition has been met is sent to the period selecting unit U₄.

In addition, said reader/writer 2 can also further comprise a training unit U₇, which is used for executing a training period and for obtaining relevant information, so as to determine a gain value set for said power adjusting unit U₂ during said enhanced period and provide it to said gain controlling unit.

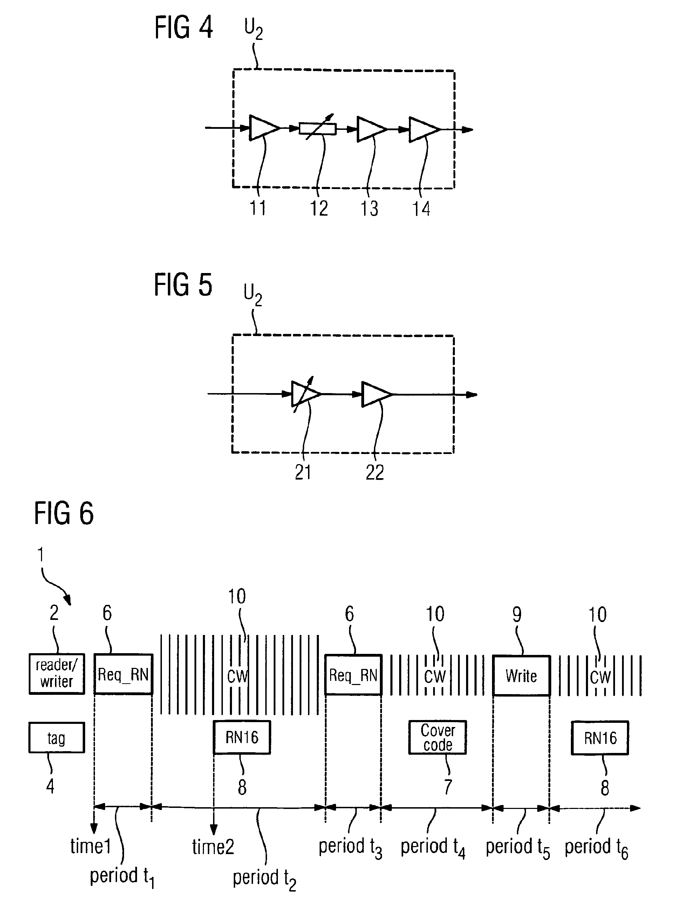

Two specific examples for realizing the power adjusting unit U₂ are given in Figs. 4 and 5.

The method for realizing the power adjusting unit U₂ in Fig. 4 is based on a variable attenuator. The modulated transmitting signals generated by the transmitting signal generating unit U₁ enter the power adjusting unit U₂, in which, after the transmitting signals have been amplified by a pre-amplifier 11, they are sent to a variable attenuator 12, and after having been attenuated by a variable attenuation value by the variable attenuator 12, they are sent into a power preamplifier 13 and a main power amplifier 14 to be amplified. Here, the gain given to the transmitting signals by each amplifier is fixed; the final gain adjustment for the transmitting signals by the power adjusting unit U₂ depends on the adjustment of the attenuation value of the variable attenuator. After this gain path, the continuous waves 10 of the enhanced period have the gain set for them by the gain controlling unit U₅ from the power adjusting unit U₂, and the transmitting power thereof can reach the enhanced transmitting power, this time the transmitting signals are sent out by the antenna unit U₃.

In the simplest case, the variable attenuator 12 has a high attenuation value corresponding to the low gain set by the gain controlling unit U₅, and has a low attenuation value corresponding to the high gain set by the gain controlling unit U₅. When the gain controlling unit U₅ sets a low gain to the power adjusting unit U₂, the variable attenuator 12 adopts the high attenuation value to attenuate the transmitting signal with a greater attenuation; when the gain controlling unit U₅ sets a high gain, the variable attenuator 12 adopts the low attenuation value to attenuate the transmitting signal with a smaller attenuation.

The method for realizing the power adjusting unit in Fig. 5 is based on a variable power amplifier. The modulated transmitting signals generated by the transmitting signal generating unit U₁ enter the power adjusting unit U₂, in which, the transmitting signals are amplified by a variable power amplifier 21 and a fixed power amplifier 22. Here, the gain given to the transmitting signals by the fixed amplifier 22 is fixed, and the final gain adjustment given to the transmitting signals by the power adjusting unit U₂ depends on the adjustment of the attenuation value of the variable attenuator 12. After this gain path, the continuous waves 10 of the enhanced period have the gain set for them by the gain controlling unit U₅ from the power adjusting unit U₂, and the transmitting power thereof can reach the enhanced transmitting power, by then the transmitting signals are sent out by the antenna unit U₃.

In the simplest case, the variable power amplifier 21 has a high gain value corresponding to the high gain set by the gain controlling unit U₅, and has a low gain value corresponding to the low gain set by the gain controlling unit U₅. When the gain controlling unit U₅ sets a high gain to the power adjusting unit U₂, the variable power amplifier 21 adopts the high attenuation value to set the transmitting signal with a greater gain; when the gain controlling unit U₅ sets a low gain, the variable power amplifier 21 adopts the low gain value to set the transmitting signal with a smaller gain.

### Embodiment two

A second embodiment of the present invention is to increase the energy supply to the tags 4 by extending the time for the reader/writer 2 to transmit the continuous waves 10. The second embodiment will be described in detail herein in combination with the process shown in Fig. 6. The process shown in Fig. 6 is basically the same as the process shown in Fig. 2, and it will not be described further redundantly. The differences between them are in the transmitting power and the transmitting time length for the continuous waves 10 during the period t₂.

As mentioned above, the reader/writer 2 will send the command signals and the continuous waves 10 during the communication process, and the tags 4 can obtain energy from the signals sent by said reader/writer 2. In this embodiment, the time length for the reader/writer 2 to transmit the continuous waves 10 to the tags 4 is extended, namely the energy obtained by the passive tags 4 can be increased correspondingly, thereby increasing the rewritable range I. Specifically, the reader/writer 2 selects at least one period (for example the period t₂) from those periods (for example the period t₂, t₄, t₆) for transmitting the continuous waves 10 as the enhanced period, and the time length for transmitting the signals to the tags 4 is adjusted, so as to send the continuous waves 10 with the extended time length to the tags 4 during the enhanced period, and send the signals with the time length determined by the conventional method to the tags 4 during the other periods.

On the other hand, extending the time length for the reader/ writer 2 to transmit the continuous waves 10 to the tags 4 will increase the time used on the writing operation by the radio-frequency identification system 1, thereby reducing the efficiency of the writing operation. In order to achieve a better balance between the rewritable range I and the efficiency of the writing operation, the reader/writer 2 can be triggered to select at least one period as the enhanced period when the preset condition is met, and sends the continuous waves 10 with the extended time length during the period. In this way, the time length for the continuous waves 10 will be extended only when necessary, and therefore the time spent on the writing operation can be reduced as much as possible. Said preset condition can be that: the received signal strength from said reader/writer 2 to the tags 4 is less than a preset reference value for the received signal strength, or the bit number to be written into the tags 4 by said reader/writer 2 is greater than a preset reference value for the bit number. A particular way for doing this is that the reader/writer 2 detects the received signal strength indicator (RSSI) of the tag 4 to which a writing operation is currently performed, and then said received signal strength is compared with a preset reference value for the received signal strength, if said received signal strength is less than the preset reference value for the received signal strength, then it is determined that the preset condition is met. Another particular way for doing this is that, the reader/writer 2 detects the number of bits to be sent to the tag 4 to which a writing operation is performed currently, and then said bit number is compared with a preset reference value for the bit number, if said bit number is greater than the preset reference value for the bit number, then it is determined that the preset condition is met. Preferably, the first period for transmitting the continuous waves 10 after having determined that the preset condition is met is used as an enhanced period, and this can promptly increase the energy supply to the tags 4 with insufficient energy, thereby improving the reliability of the subsequent operation even more.

In this embodiment, as an example, only one period t₂ is selected to enhance the transmitting power of the continuous waves 10. As an alternative solution, more than one period (for example the periods t₂, t₄) can also be selected to enhance the transmitting power of the continuous waves 10. It is better to select the number of the enhanced periods according to the specific needs for energy by the tag's writing operation, so as to achieve better effects.

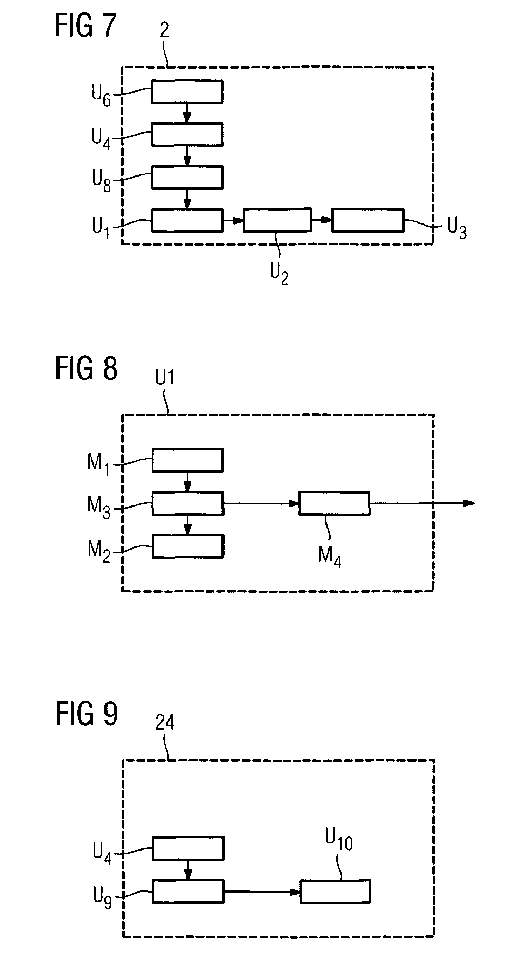

Fig. 7 gives a reader/writer 2 for realizing said method of the second embodiment of the present invention.

The reader/writer 2 comprises a transmitting signal generating unit U₁, a power adjusting unit U₂, an antenna unit U₃, a period selecting unit U₄ and a time length setting unit U₈.

In this case, the transmitting signal generating unit U₁ generates transmitting signals to be sent to the tags 4, and said transmitting signals comprise at least one period for transmitting the command signals and at least one period for transmitting the continuous waves 10, and then the transmitting signals are output to said power adjusting unit U₂. The power adjusting unit U₂ is used for performing a power adjustment to the transmitting signals provided by the transmitting signal generating unit U₁ according to the set gain. The antenna unit U₃ is used for transmitting the transmitting signals from said power adjusting unit U₂. The power adjusting U₂ unit and the antenna unit U₃ are basically the same as the corresponding units of the existing reader/writer 2, and their detailed realization can refer to the prior art.

According to the reader/writer 2 of the present invention, a period selecting unit U₄ is also provided in the reader/ writer, 2 which is used for selecting at least one period from the periods for transmitting continuous waves 10 as an enhanced period.

According to the reader/writer 2 of the present invention, a time length setting unit U₈ is also provided, which is used for controlling the time length of the transmitting signals of said transmitting signal generating unit U₁, so as to extend the time length of the above-mentioned period for transmitting the continuous waves 10 during said enhanced period.

In order to achieve a better balance between the rewritable range I and the efficiency of the writing operation, the reader/writer 2 is triggered to select at least one period as the enhanced period when the preset condition is met and the continuous waves 10 are sent out over the extended time length during the period. To achieve the object, said reader/writer 2 of the present invention further comprises a condition judging unit U₆ for detecting the received signal strength for the tag 4, wherein when it judges that said received signal strength is less than a preset reference value for the received signal strength, it triggers said period selecting unit U₄ to select at least one period from the periods for transmitting the continuous waves 10 as an enhanced period; or a condition judging unit U₆ for detecting a bit number to be written to the tag 4, wherein when it judges that said bit number is greater than a preset reference value for the bit number, it triggers said period selecting unit U₄ to select at least one period from the periods for transmitting the continuous waves 10 as an enhanced period.

As shown in Fig. 8, specifically, the transmitting signal generating unit U₁ can comprise: a continuous wave sequence providing module M₁, a command sequence providing module M₂, a sequence synthesizing module M₃ and a modulating module M₄.

In this case, the continuous wave sequence providing module M₁ is used for providing a continuous wave sequence to be sent to the tags 4, and determining the time length of the continuous wave sequence according to the configuration of the time length setting unit U₈, so as to make it reach said time length set by said time length setting unit U₈. Here, the so-called continuous wave sequence is the digital sequence for generating the continuous waves 10. The command sequence providing module M₂ is used for providing a command sequence to be sent to the tags 4. Here, the so-called command sequence is the digital sequence for generating the command signals. The sequence synthesizing module M₃ is used for synthesizing said command sequence and said continuous wave sequence into a digital sequence to be sent to the tags 4. The modulating module M₄ is used for modulating said digital sequence output from said sequence synthesizing module, generating the transmitting signals, and then outputting to said power adjusting unit U₂.

### Illustrative Example

An illustrative example is to increase the energy supply to the tags 4 by adding an independent energy supplying apparatus 24 in the radio-frequency identification system using 1 the passive tags 4. The main idea thereof is to dispose at least one independent energy supplying apparatus 24 in the radio-frequency identification system 1 using the passive tags 4, which sends a segment of continuous wave 10 with a certain length during the communication process of said radio-frequency identification system 1, so as to provide additional energy to the tags 4. Said continuous waves 10 sent by the independent energy supplying apparatus 24 should be in line with a maximum allowable transmitting power limited by the radio-related regulations.

As mentioned above, the reader/writer 2 will send the command signals and the continuous waves 10 during the communication process, and the tags 4 can obtain energy from the signals, especially the continuous waves 10, sent by said reader/ writer 2. In order to avoid the interference to the communication of the radio-frequency identification system 1, it is better for the independent power supplying apparatus 24 to select the periods of the reader/writer 2 to transmit the continuous waves 10 to the tags 4 (for example the period t₂, t₄, t₆ shown in Fig. 2) to send a segment of continuous wave 10 with a certain length to the tags 4, and the selected period can be one (for example the period t₂ as shown in Fig. 2), or also more than one (for example the period t₂, t₄ as shown in Fig. 2), the time length of this segment of the continuous wave 10 is the same as the time length of the period for said reader/writer 2 to transmit the continuous waves 10 to the tags 4. Specific realization can be as follows, the independent energy supplying apparatus 24 selects at least one period from those periods for transmitting the continuous waves 10 as an enhanced period, monitors the communication process of said reader/writer 2, and when it is determined that it enters said enhanced period, it sends the continuous waves 10 to the tags 4 until it monitors that said reader/writer 2 starts to send a next command. Specifically, it is by monitoring that the reader/ writer 2 has finished sending a command that the entering point of said enhance period is determined. The independent energy supplying apparatus can monitor said communication process of the reader/writer 2 in a way similar to that for the tags 4 to receive the signals sent by the reader/writer 2, but it does not need to return any information to the reader/writer 2.

The independent energy supplying apparatus 24 can be an independent entity, therefore it can be disposed near the tags 4 which are far away from the reader/writer 2, and thus this can effectively improve the reliability of the writing operation of these tags 4. Preferably, more than one independent energy supplying apparatus 24 can be disposed in the radio-frequency identification system 1, and these independent energy supplying apparatuses 24 can be correspondingly distributed according to a desired rewritable range I, thereby forming a distributed independent energy supplying apparatus network. This can extend the rewritable range I in a more targeted manner.

Fig. 9 gives a schematic diagram of the independent energy supplying apparatus 24 according to the second embodiment. The independent energy supplying apparatus 24 comprises: a period selecting unit U₄, a period controlling unit U₉, and a continuous wave transmitting unit U₁₀. In this case, the period selecting unit U₄ is used for selecting at least one period from the periods for transmitting the continuous waves 10 as the enhanced period. The period controlling unit U₉ is used for monitoring the communication process of said reader/writer 2, when the starting of said enhanced period by said reader/writer 2 is determined, it transmits an instruction to send the continuous waves 10, and when the beginning of transmission of a next command by said reader/ writer 2 is determined, it transmits an instruction to stop transmitting the continuous waves 10. The continuous wave transmitting unit is used for transmitting the continuous waves 10 to the tags 4 when it receives an instruction for transmitting the continuous waves 10 sent by said period controlling unit U₉, until it receives said instruction to stop transmitting the continuous waves 10.

In each of the above embodiments, the process in the stage of the writing operation is mainly taken as an example to describe the present invention. Those skilled in the art can understand that if the enhanced period in the above embodiment is selected during the reading operation, then it can be an embodiment in the reading operation. When the present invention is applied to the reading operation, the specific method thereof is similar to the above embodiments, but in the case of the reader/writer 2 not executing the writing operation, it is not by the number of written bits to determine whether to trigger to enhance the power or extend the transmitting time. Therefore, for the embodiment applied to the reading operation, no further description is to be made here redundantly.

Therefore, in the present invention, by way of enhancing the transmitting power of certain or some transmitting periods or extending the transmitting time thereof during the reading and/or writing operations, the energy supply to the tags 4 can be increased, thereby improving the reliability of the subsequent operations.

It can be seen from the above description that, in the implementation of the first embodiment and the second embodiment of the present invention, it is only necessary to make partial modification to the existing reader/writers 2, without any modification to the tags 4, this being simple to implement.

## Claims

1. A method for providing energy to a passive tag (4) in a radio-frequency identification system (1), wherein a communication process of a reader/writer (2) of said radio-frequency identification system (1) comprises at least one period for transmitting command signals and at least one period for transmitting continuous waves (10), and the tag (4) of said radio-frequency identification system (1) obtains energy from said continuous waves (10);
said reader/writer (2) selects at least one period from the period(s) for transmitting the continuous waves (10) as an enhanced period;
then, said reader/writer (2) adjusts a gain for transmitting signals, so as to send the continuous waves (10) with an enhanced power during said enhanced period, and/or, said reader/writer (2) adjusts a time length for transmitting the continuous waves (10) to the tag (4), so as to send the continuous waves (10) with an extended time length during said enhanced period,
**characterized in**
**that** said reader/writer (2) further executes a training period for obtaining relevant information for adjusting said gain.

2. The method as claimed in claim 1, **characterized in that** said step for selecting the enhanced period comprises: when said reader/writer (2) detects that a received signal strength for the tag (4) is less than a preset reference value for the received signal strength, said reader/writer (2) selects at least one of a current or a subsequent period for transmitting the continuous waves (10) as said enhanced period.

3. The method as claimed in claim 1, **characterized in that** said step for selecting the enhanced period comprises: when a bit number to be written by said reader/writer (2) into the tag (4) is greater than a preset reference value for the bit number, said reader/writer (2) selects at least one of a current or a subsequent period for transmitting the continuous waves (10) as said enhanced period.

4. The method as claimed in claim 1, **characterized in that** said enhanced period is pre-selected by said reader/writer (2).

5. The method as claimed in claim 1, **characterized in that** said enhanced transmitting power is greater than a transmitting power for transmitting the command signals.

6. The method as claimed in claim 1 or 5, **characterized in that** said enhanced transmitting power is a maximum allowable transmitting power.

7. A reader/writer (2) for implementing the method as claimed in claim 1, comprising:
a transmitting signal generating unit U₁, adapted for generating transmitting signals to be sent to the tag (4), with said transmitting signals comprising at least one period for transmitting the command signals and at least one period for transmitting the continuous waves (10);
a power adjusting unit U₂, adapted for receiving the transmitting signals provided by said transmitting signal generating unit U₁, and for performing a power adjustment to said transmitting signals according to a set gain;
an antenna unit U₃, adapted for transmitting out the transmitting signals from said power adjusting unit U₂;
a period selecting unit U₄, adapted for selecting at least one period from the period(s) for transmitting continuous waves (10) as an enhanced period;
a gain controlling unit U₅, said gain controlling unit being used for adjusting the gain of said power adjusting unit U₂, so as to make the continuous waves (10) reach an enhanced transmitting power during said enhanced period; and/or, a time length setting unit U₈, adapted for controlling the time length of the transmitting signals of said transmitting signal generating unit U₁, so as to extend the time length of the above period for transmitting the continuous waves (10) during said enhanced period,
**characterized in**
**that** said reader/writer (2) also comprises:
a training unit U₇, adapted for executing a training period and obtaining relevant information, so as to determine the gain set for said power adjusting unit during said enhanced period and to provide the relevant information to said gain controlling unit (U₅).

8. The reader/writer (2) as claimed in claim 7,
**characterized in that** said reader/writer (2) further comprises:
a condition judging unit U₆, adapted for detecting the received signal strength for the tag (4), wherein when the condition judging unit U₆ judges that said received signal strength is less than a preset reference value for the received signal strength, the condition judging unit U₆ triggers said period selecting unit U₄ to select the enhanced period.

9. The reader/writer (2) as claimed in claim 7,
**characterized in that** said reader/writer (2) further comprises:
a condition judging unit U₆, adapted for detecting a bit number to be written to the tag (4), wherein when the condition judging unit U₆ judges that said bit number is greater than a preset reference value for the bit number, the condition judging unit U₆ triggers said period selecting unit U₄ to select the enhanced period.

## Patentansprüche

1. Verfahren zum Bereitstellen von Energie für ein passives Tag (4) in einem RFID-System (1), wobei ein Kommunikationsverfahren einer Lese-/Schreibvorrichtung (2) des RFID-Systems (1) mindestens eine Periode zum Senden von Befehlssignalen und mindestens eine Periode zum Senden von kontinuierlichen Wellen (10) umfasst und das Tag (4) des RFID-Systems (1) Energie aus den kontinuierlichen Wellen (10) erhält;
die Lese-/Schreibvorrichtung (2) mindestens eine Periode aus der Periode bzw. den Perioden zum Senden der kontinuierlichen Wellen (10) als eine verstärkte Periode auswählt;
die Lese-/Schreibvorrichtung (2) anschließend eine Verstärkung zum Senden von Signalen anpasst, um die kontinuierlichen Wellen (10) während der verstärkten Periode mit einer verstärkten Leistung zu senden, und/oder die Lese-/Schreibvorrichtung (2) eine Zeitdauer zum Senden der kontinuierlichen Wellen (10) zu dem Tag (4) anpasst, um die kontinuierlichen Wellen (10) während der verstärkten Periode mit einer verlängerten Zeitdauer zu senden,
**dadurch gekennzeichnet,**
**dass** die Lese-/Schreibvorrichtung (2) ferner eine Schulungsperiode zum Erhalten relevanter Informationen zum Anpassen der Verstärkung ausführt.

2. Verfahren nach Anspruch 1, **dadurch gekennzeichnet, dass** der Schritt zum Auswählen der verstärkten Periode das Folgende umfasst: wenn die Lese-/Schreibvorrichtung (2) erfasst, dass eine empfangene Signalstärke für das Tag (4) geringer als ein voreingestellter Referenzwert für die empfangene Signalstärke ist, wählt die Lese-/Schreibvorrichtung (2) mindestens eine aus einer aktuellen oder einer folgenden Periode zum Senden der kontinuierlichen Wellen (10) als die verstärkte Periode aus.

3. Verfahren nach Anspruch 1, **dadurch gekennzeichnet, dass** der Schritt zum Auswählen der verstärkten Periode das Folgende umfasst: wenn eine Bitzahl, die von der Lese-/Schreibvorrichtung (2) in das Tag (4) zu schreiben ist, höher als ein voreingestellter Referenzwert für die Bitzahl ist, wählt die Lese-/Schreibvorrichtung (2) mindestens eine aus einer aktuellen oder einer folgenden Periode zum Senden der kontinuierlichen Wellen (10) als die verstärkte Periode aus.

4. Verfahren nach Anspruch 1, **dadurch gekennzeichnet, dass** die verstärkte Periode von der Lese-/Schreibvorrichtung (2) vorab ausgewählt wird.

5. Verfahren nach Anspruch 1, **dadurch gekennzeichnet, dass** die verstärkte Sendeleistung höher als eine Sendeleistung zum Senden der Befehlssignale ist.

6. Verfahren nach Anspruch 1 oder 5, **dadurch gekennzeichnet, dass** die verstärkte Sendeleistung eine maximal zulässige Sendeleistung ist.

7. Lese-/Schreibvorrichtung (2) zum Realisieren des Verfahrens nach Anspruch 1, umfassend:
eine Sendesignal-Erzeugungseinheit U₁, welche zum Erzeugen von Sendesignalen geeignet ist, die zu dem Tag (4) zu senden sind, wobei die Sendesignale mindestens eine Periode zum Senden der Befehlssignale und mindestens eine Periode zum Senden der kontinuierlichen Wellen (10) umfassen;
eine Leistungsanpassungseinheit U₂, welche zum Empfangen der Sendesignale, die von der Sendesignal-Erzeugungseinheit U₁ bereitgestellt werden, und zum Durchführen einer Leistungsanpassung an die Sendesignale gemäß einer eingestellten Verstärkung geeignet ist;
eine Antenneneinheit U₃, welche zum Aussenden der Sendesignale von der Leistungsanpassungseinheit U₂ geeignet ist;
eine Periodenauswahleinheit U₄, welche zum Auswählen mindestens einer Periode aus der Periode bzw. den Perioden zum Senden von kontinuierlichen Wellen (10) als eine verstärkte Periode geeignet ist;
eine Verstärkungssteuerungseinheit U₅, wobei die Verstärkungssteuerungseinheit zum Anpassen der Verstärkung der Leistungsanpassungseinheit U₂ verwendet wird, um zu bewirken, dass die kontinuierlichen Wellen (10) eine verstärkte Sendeleistung während der verstärkten Periode erreichen;
und/oder eine Zeitdauer-Einstellungseinheit U₈, welche zum Steuern der Zeitdauer der Sendesignale der Sendesignal-Erzeugungseinheit U₁ geeignet ist, um die Zeitdauer der obigen Periode zum Senden der kontinuierlichen Wellen (10) während der verstärkten Periode zu verlängern,
**dadurch gekennzeichnet,**
**dass** die Lese-/Schreibvorrichtung (2) ferner das Folgende umfasst:
eine Schulungseinheit U₇, welche zum Ausführen einer Schulungsperiode und Erhalten relevanter Informationen geeignet ist, um die eingestellte Verstärkung für die Leistungsanpassungseinheit während der verstärkten Periode zu bestimmen und um die relevanten Informationen der Verstärkungssteuerungseinheit U₅ bereitzustellen.

8. Lese-/Schreibvorrichtung (2) nach Anspruch 7, **dadurch gekennzeichnet, dass** die Lese-/Schreibvorrichtung (2) ferner das Folgende umfasst:
eine Bedingungsbeurteilungseinheit U₆, welche zum Erfassen der empfangenen Signalstärke für das Tag (4) geeignet ist, wobei, wenn die Bedingungsbeurteilungseinheit U₆ beurteilt, dass die empfangene Signalstärke geringer als ein voreingestellter Referenzwert für die empfangene Signalstärke ist, die Bedingungsbeurteilungseinheit U₆ die Periodenauswahleinheit U₄ dazu bringt, die verstärkte Periode auszuwählen.

9. Lese-/Schreibvorrichtung (2) nach Anspruch 7, **dadurch gekennzeichnet, dass** die Lese-/Schreibvorrichtung (2) ferner das Folgende umfasst:
eine Bedingungsbeurteilungseinheit U₆, welche zum Erfassen einer Bitzahl geeignet ist, die in das Tag (4) zu schreiben ist, wobei, wenn die Bedingungsbeurteilungseinheit U₆ beurteilt, dass die Bitzahl höher als ein voreingestellter Referenzwert für die Bitzahl ist, die Bedingungsbeurteilungseinheit U₆ die Periodenauswahleinheit U₄ dazu bringt, die verstärkte Periode auszuwählen.

## Revendications

1. Procédé pour fournir de l'énergie à une étiquette ( 4 ) passive dans un système (1) d'identification par radiofréquence, dans lequel une opération de communication d'un dispositif ( 2 ) de lecture/écriture du système ( 1 ) d'identification par radiofréquence comprend au moins une période d'émission de signaux d'instructions et au moins une période d'émission d'ondes (10) continues, et l'étiquette (4) du système ( 1 ) d'identification par radio fréquence obtient de l'énergie de ces ondes ( 10 ) continues,
le dispositif ( 2 ) de lecture/écriture sélectionne au moins une période parmi les périodes de transmission des ondes continues comme période renforcée ;
puis, le dispositif ( 2 ) de lecture/écriture règle un gain des signaux émis de manière à envoyer les ondes ( 10 ) continues à une puissance renforcée pendant la période renforcée et/ou, le dispositif ( 2 ) de lecture/écriture règle une longueur de temps pour émettre les ondes ( 10 ) continues vers l'étiquette ( 4 ), de manière à envoyer les ondes ( 10 ) continues pendant une longueur de temps prolongée pendant la période renforcée,
**caractérisé en**
**ce que** le dispositif ( 2 ) de lecture/écriture effectue en outre une période d'apprentissage pour obtenir de l'information pertinente pour régler le gain.

2. Procédé suivant la revendication 1, **caractérisé en ce que** le stade de sélection de la période renforcée comprend :
lorsque le dispositif ( 2 ) de lecture/écriture détecte qu'une intensité d'un signal reçu pour l'étiquette ( 4 ) est plus petite qu'une valeur de référence fixée à l'avance de l'intensité du signal reçu, le dispositif ( 2 ) de lecture/écriture sélectionne au moins l'une d'une période présente ou à venir pour émettre les ondes ( 10 ) continues comme période renforcée.

3. Procédé suivant la revendication 1, **caractérisé en ce qu'**au stade de sélection de la période renforcée comprend :
lorsqu'un nombre de bits à écrire par le dispositif ( 2 ) de lecture/écriture dans l'étiquette ( 4 ) est plus grand qu'une valeur de référence fixée à l'avance du nombre de bits, le dispositif ( 2 ) de lecture/écriture sélectionne au moins l'une d'une période présente ou à venir d'émission des ondes continues comme période renforcée.

4. Procédé suivant la revendication 1, **caractérisé en ce que** la période renforcée est sélectionnée à l'avance par le dispositif ( 2 ) de lecture/écriture.

5. Procédé suivant la revendication 1, **caractérisé en ce que** la puissance d'émission renforcée est plus grande qu'une puissance d'émission des signaux d'instructions.

6. Procédé suivant l'une des revendications 1 ou 5, **caractérisé en ce que** la puissance d'émission renforcée est une puissance d'émission maximum permise.

7. Dispositif ( 2 ) de lecture/écriture pour mise en oeuvre du procédé tel que revendiqué à la revendication 1, comprenant :
une unité U₁ de production de signaux d'émission à envoyer à l'étiquette ( 4 ), le signal d'émission comprenant au moins une période d'émission des signaux d'instruction et au moins une période d'émission des ondes ( 10 ) continues ;
une unité U₂ de réglage de la puissance conçue pour recevoir les signaux d'émission fournis par l'unité U₁ de production de signaux d'émission pour effectuer un réglage de puissance sur ces signaux d'émission suivant un gain réglé ;
une unité U₃ d'antenne d'émission des signaux d'émission à partir de l'unité U₂ de réglage de puissance ;
une unité U₄ de période conçue pour sélectionner au moins une période parmi la ou les périodes de transmission d'ondes ( 10 ) continues comme période renforcée ;
une unité U5 de commande de gain, l'unité de commande de gain étant utilisée pour régler le gain de l'unité U2 de réglage de puissance, de manière à faire en sorte que les ondes ( 10 ) continues atteignent une puissance d'émission renforcée pendant la période renforcée ;
et/ou, une unité U₈ de fixation de longueur de temps conçue pour commander la longueur de temps des signaux émis de l'unité U₁ de production de signaux émis, de manière à prolonger la longueur de temps de la période ci-dessus d'émission des ondes ( 10 ) continues pendant la période renforcée,
**caractérisé en**
**ce que** le dispositif ( 2 ) de lecture/écriture comprend aussi :
une unité U₇ d'apprentissage conçue pour exécuter une période d'apprentissage et obtenir de l'information pertinente de manière à déterminer le gain réglé pour l'unité de réglage de puissance pendant la période renforcée et pour fournir l'information pertinente à l'unité U₅ de commande de gain.

8. Dispositif ( 2 ) de lecture/écriture suivant la revendication 7,
**caractérisé en ce que** le dispositif ( 2 ) de lecture/écriture comprend en outre :
une unité U₆ de jugement d'état, conçu pour détecter l'intensité du signal reçu pour l'étiquette ( 4 ), dans lequel lorsque l'unité U₆ de jugement d'état juge que l'intensité du signal reçu est inférieure à une valeur de référence réglée à l'avance de l'intensité du signal reçu, l'unité U₆ de jugement d'état déclenche l'unité U₄ de sélection de période pour sélectionner la période renforcée.

9. Dispositif ( 2 ) de lecture/écriture suivant la revendication 7,
**caractérisé en ce que** le dispositif ( 2 ) de lecture/écriture comprend en outre :
une unité U₆ de jugement d'état conçue pour détecter un nombre de bits à écrire dans l'étiquette ( 4 ), dans lequel lorsque l'unité U₆ de jugement d'état juge que le nombre de bits est plus grand qu'une valeur de référence réglée à l'avance du nombre de bits, l'unité U₆ de jugement d'état déclenche l'unité U₄ de sélection de période pour sélectionner la période renforcée.
